# EUROPÄISCHE PATENTSCHRIFT

(11) **EP 2 609 976 B1**
(45) Veröffentlichungstag und Bekanntmachung des Hinweises auf die Patenterteilung: **27.08.2014**
(21) Anmeldenummer: 13161559.3
(22) Anmeldetag: 20.02.2009
(51) Int. Cl.: E03B 3/03, E03B 1/04, B01D 17/02, B01D 17/04, E03F 3/00, E03F 5/16, E03F 3/04

(54) **Leichtflüssigkeitsabscheidevorrichtung**
Light fluid separation device
Dispositif de séparation de liquides légers

(43) Veröffentlichungstag der Anmeldung: 03.07.2013
(62) Teilanmeldung aus: 09002449.8
(73) Patentinhaber: Fränkische Rohrwerke Gebr. Kirchner GmbH + Co KG, 97486 Königsberg/Bayern (DE)
(72) Erfinder: ADAMS, Dietmar, 01328 Dresden (DE); KRIESE, Jens, 14621 Schönwalde (DE); WILHELM, Jörg, 72070 Tübingen (DE); CZESCH, Christian, 93055 Regensburg (DE); HAASE, Reinhard, 32689 Kalletal (DE)
(74) Vertreter: Herzog, Markus

(56) Entgegenhaltungen:
- EP-A1- 1 559 465
- WO-A-2005/115583
- DE-A1- 2 164 477
- DE-A1- 19 916 964
- DE-U1-202005 005 946
- FR-A- 599 284

## Beschreibung

Die Erfindung betrifft eine Leichtflüssigkeitsabscheidevorrichtung zum zumindest teilweisen Entfernen von Leichtflüssigkeit, beispielsweise ÖI, Benzin oder dergleichen, aus Abwasser nach dem Oberbegriff des Anspruchs 1.

Insbesondere die Bewirtschaftung von Regenwasser umfasst im Wesentlichen die Nutzung, Rückhaltung, Behandlung und Versickerung von Wasser, das in Form von Regen auf befestigten Flächen niedergeht. Durch diese Regenwasserbewirtschaftung soll, soweit möglich, die direkte Einleitung des Regenwassers in das Kanalnetz vermieden werden. Dabei gewinnt die Behandlung des anfallenden Regenwassers zunehmend an Bedeutung. Beispielsweise werden bei der Regenwasserversickerung zunehmend höhere Anforderungen an die Wasserqualität bzw. die Freiheit des zu beseitigenden Wasser von Schadstoffen gestellt. So enthält beispielsweise Regenwasser von Verkehrs-, Parkplatz- oder Hofflächen eine größere Menge an Verunreinigungen, insbesondere auch an Ölen oder Benzin- bzw. Dieselkraftstoffen. Daher muss das auf diesen Flächen anfallende Regenwasser über eine belebte Bodenzone oberirdisch versickert werden. Da hierfür teure Grundstücksflächen zur Verfügung gestellt werden müssen, besteht daher Bedarf an einer unterirdischen Vorreinigung mit einer äquivalenten Reinigungsleistung.

Da bereits sehr geringe Mengen an Mineralölen bzw. Mineraföl-Kohlenwasserstoffen (MKW), d.h. Mengen in der Größenordnung von nur wenigen Tropfen, in der Lage sind, sehr große Mengen an Wasser zu verseuchen, d.h. Mengen in der Größenordnung von mehreren 1.000 Litern, ist es in Europa bereits gesetzlich vorgeschrieben, besonders gefährdete Flächen, wie zum Beispiel Tankstellen oder Stellflächen für Schadfahrzeuge, mit Leichtflüssigkeitsabscheidern auszustatten.

Die herkömmlich eingesetzten Leichtflüssigkeitsabscheidevorrichtungen arbeiten dabei vorwiegend nach einem quasi-stationären Prinzip. D.h. Abwasser wird in einen Behälter eingeleitet, welcher durch seine Größe ein Beruhigungsvolumen darstellt, so dass die Strömung des Abwassers zwischen einem Abwassereinlass und einem Abwasserauslass in dem Behälter annähernd zum Erliegen kommt. Hierdurch hat die Leichtflüssigkeit ausreichend Zeit, um aufgrund ihrer geringeren spezifischen Dichte an die Oberfläche des Abwassers aufzusteigen, von wo es entfernt werden kann, während das von der Leichtflüssigkeit befreite Abwasser jenseits einer Tauchwand aus dem Behälter ausgeleitet wird. Die Effizienz einer solchen Vorrichtung kann dadurch erhöht werden, dass zwischen dem Abwassereinlass und dem Abwasserauslass im Behälter beispielsweise ein engmaschiges Netz mit dreidimensionaler Struktur und großer Oberfläche angeordnet ist, durch welches das Abwasser langsam hindurchströmt. An der Oberfläche eines solchen Netzes lagern sich auch diejenigen im Abwasser befindlichen Leichtflüssigkeitspartikel an, die aufgrund ihres zu geringem Durchmessers einen zu geringen Auftrieb haben, um zur Oberfläche aufsteigen zu können. An dem Netz fließen diese sehr kleinen Leichtflüssigkeitspartikel dann durch den sogenannten Koaleszenzeffekt zusammen und bilden größere Leichtflüssigkeitstropfen, die einen höheren Auftrieb erfahren und daher zur Oberfläche des Abwassers aufsteigen können.

Nachteilig bei derart quais-stationär arbeitenden Leichtflüssigkeitsabscheidevorrichtungen ist jedoch, dass sehr große Behälter benötigt werden, um ein ausreichend großes Beruhigungsvolumen bereitzustellen. Da bei der Bemessung der Behältergröße zudem von einem Starkregenereignis auszugehen ist, führt dies pro Flächeneinheit zu sehr großen Behältern, bzw. sind die anschließbaren Flächen für einen Behälter vorgegebener Größe verhältnismäßig klein. Die Fertigung und Installation derartiger Leichtflüssigkeitsabscheidevorrichtungen ist daher sehr kostspielig, was dazu führt, dass ausschließlich die gesetzlich vorgeschriebenen besonders gefährdeten Flächen mit derartigen Vorrichtungen ausgestattet werden. Bei Parkplätzen oder Straßen hingegen wird das anfallende Regenwasser aus Kostengründen in der Regel nicht von Leichtflüssigkeitsbestandteilen gereinigt, sondern das anfallende Regenwasser wird vielmehr direkt in die Kanalisation eingeleitet oder in den Untergrund versickert. Gerade bei anschließender Versickerung geht daher von diesen Flächen eine erhöhte Gefahr einer Grundwasserverunreinigung aus, welche Vorreinigungsmaßnahmen erforderlich macht.

Aus der EP 0 960 642 A1 ist eine Leichtflüssigkeitsabscheidevorrichtung bekannt, welche zur Entfernung von Leichtflüssigkeitsanteilen aus Abwasser aus Gründen der Platzersparnis auf die Verwendung eines Beruhigungsvolumens verzichtet. Bei diesem Verfahren wird das mit Leichtflüssigkeit verunreinigte Abwasser durch eine spiralenähnliche Form geleitet, wobei das gegenüber der Leichtflüssigkeit schwerere Wasser aufgrund der Fliehkraft nach außen in der Spirale gedrückt wird, so dass sich die Leichtflüssigkeit im Inneren der Spirale ansammelt und von dort abgesogen werden kann. Diese Leichtflüssigkeitsabscheidevorrichtung ist jedoch technisch relativ kompliziert und daher kostenintensiv. Daher eignet sie sich ebenfalls nicht zum großflächigen Einsatz bei der Reinigung von Regenwasser, das auf versiegelte Flächen, wie zum Beispiel Straßen oder Parkplätze, niedergegangen ist.

Aus der gattungsbildenden DE-U-20 2005 005 946 ist eine Sedimentationsvorrichtung bekannt, welche bei entsprechender Anordnung auch als Leichtflüssigkeitsabscheidevorrichtung genutzt werden könnte, obgleich diese Möglichkeit in dieser Schrift nicht erwähnt ist.

Es ist daher Aufgabe der vorliegenden Erfindung, eine Leichtflüssigkeitsabscheidevorrichtung bereitzustellen, die einfach im Aufbau und daher, kostengünstig in der Produktion, der Installation bzw. auch im Betrieb ist, so dass sie sich für den großflächigen Einsatz eignet.

Diese Aufgabe wird durch eine Leichtflüssigkeitsabscheidevorrichtung mit den Merkmalen des Anspruchs 1 gelöst.

Zwar kommt es zugegebenermaßen auch in herkömmlichen Abwasserrohren dann, wenn das Abwasser Leichtflüssigkeit mit sich führt, zum dichtebedingten Aufsteigen zumindest eines Teils dieser Leichtflüssigkeit nach oben in Richtung Scheitel des Abwasserrohres. Diese aufgestiegene Leichtflüssigkeit wird jedoch nicht zurückgehalten und durch die Strömung des Abwassers mitgerissen und verlässt mit dieser die Auslassöffnung des Abwasserrohres. Von derartigen herkömmlichen Abwasserrohren unterscheidet sich das Leichtflüssigkeitsabscheiderohr der erfindungsgemäßen Leichtflüssigkeitsabscheidevorrichtung vor allem dadurch, dass die im Rohr nach oben aufgestiegene Leichtflüssigkeit nicht mit der Strömung des Abwassers aus der wenigstens einen Austrittsöffnung wieder aus dem Leichtflüssigkeitsabscheiderohr austritt, sondern dass sich die Leichtflüssigkeit in einem vom Strömungsraum separaten, strömungsberuhigten Leichtflüssigkeitsabscheideraum ansammelt und dort zurückgehalten wird. Dabei ist es erfindungsgemäß von großer Bedeutung, dass der Leichtflüssigkeitsabscheideraum der erfindungsgemäßen Leichtflüssigkeitsabscheidevorrichtung nicht vom Abwasser durchströmt wird, sondern dass er bezüglich der Strömung des Abwassers einen Totraum bildet.

Im Gegensatz zu den bekannten quasi-stationär arbeitenden Leichtflüssigkeitsabscheidevorrichtungen kommt die erfindungsgemäße Leichtflüssigkeitsabscheidevorrichtung ohne die Bereitstellung eines großen Beruhigungsvolumens aus, so dass die Vorrichtung sehr platzsparend und kostengünstig installiert werden kann. Insbesondere ist es möglich, ohnehin benötigte Abwasserrohre durch Leichtflüssigkeitsabscheiderohre der erfindungsgemäßen Leichtflüssigkeitsabscheidevorrichtung zu ersetzen. Der sich im Abwasser befindlichen Leichtflüssigkeit steht die gesamte Zeit, die das Abwasser benötigt, um von der wenigstens einen Eintrittsöffnung durch das Rohr bis zur wenigstens einen Auslassöffnung zu strömen, zur Verfügung, um nach oben zur Decke des Strömungsraums des Leichtflüssigkeitsabscheiderohrs aufzusteigen. Vorteilhaft gegenüber einer Vorrichtung, die mit einem als Beruhigungsvolumen dienenden großen Behälter arbeitet, ist bei der erfindungsgemäßen Leichtflüssigkeitsabscheidevorrichtung zudem, dass die maximale Wegstrecke, welche die Leichtflüssigkeit zurücklegen muss, um die Decke des Strömungsraums des Leichtflüssigkeitsabscheiderohrs zu erreichen, aufgrund der Rohrform relativ kurz ist (sie entspricht im Wesentlichen der Höhe des Strömungsraums). Somit ist auch die zum Aufsteigen benötigte Zeit relativ kurz, was höhere Strömungsgeschwindigkeiten im Strömungsraum ermöglicht.

Gegenüber der aus dem Stand der Technik bekannten Vorrichtung, welche mit einer spiralenähnlichen Form arbeitet, hat die erfindungsgemäße Leichtflüssigkeitsabscheidevorrichtung den Vorteil, dass sie konstruktiv sehr einfach ausgestaltet und somit entsprechend kostengünstig in der Herstellung und im Betrieb ist.

Um eine einfache Fertigung und Handhabung gewährleisten zu können, wird vorgeschlagen, dass das wenigstens eine Leichtflüssigkeitsabscheiderohr vorzugsweise im Wesentlichen geradlinig ausgebildet ist oder/und vorzugsweise einen im Wesentlichen kreisförmigen Querschnitt aufweist.

Für die Erzielung einer zufriedenstellenden Leichtflüssigkeitsabscheidefunktion ist es ferner vorteilhaft, wenn das Verhältnis der Länge des Leichtflüssigkeitsabscheiderohrs zu seinem Durchmesser höchtens 1:5, vorzugsweise höchstens 1:10, beträgt. In diesem Fall haben die Leichtflüssigkeitstropfen während des Durchströmens des Leichtflüssigkeitsabscheiderohrs ausreichend Zeit, um zum Leichtflüssigkeitsabscheideraum aufzusteigen.

Erfindungsgemäß umfasst die Leichtflüssigkeitsabscheidevorrichtung ferner eine Überlaufwand. Diese Überlaufwand ist dabei in Strömungsrichtung des Abwassers hinter der wenigstens einen Auslassöffnung des wenigstens einen Leichtflüssigkeitsabscheiderohrs angeordnet. Ferner weist die Überlaufwand eine Höhe auf, die groß genug ist, um sicherzustellen, dass dann, wenn Abwasser die Leichtflüssigkeitsabscheidevorrichtung verlässt, der Abwasserpegel stets hoch genug ist, um die abgeschiedene Leichtflüssigkeit in dem wenigstens einem Leichtflüssigkeitsabscheideraum zurückhalten zu können. Für den Fall eines mit Gegengefälle angeordneten Leichtflüssigkeitsabscheiderohrs bedeutet dies, dass die Überlaufwand vorzugsweise in Strömungsrichtung hinter einem am höchsten gelegenen Durchtrittsabschnitt der Durchtrittsöffnung bzw. der Durchtrittsöffnungen und ferner vorzugsweise höher als dieser Durchtrittsabschnitt angeordnet sein sollte.

Für den Fall des Vorhandenseins mehrerer Durchtrittsöffnungen kann ein den Durchtrittsöffnungen benachbarter Abschnitt wenigstes eines Strömungsraums mit wenigstens einem Quersteg versehen sein, welcher bezüglich der Strömungsrichtung beispielsweise im Wesentlichen orthogonal oder schräg angeordnet ist. Derartige Gitter- oder Lamellenstrukturen der Durchtrittsöffnungen können dazu beitragen, den wenigstens einen Strömungsraum strömungstechnisch effizient von dem wenigstens einen Leichtflüssigkeitsabscheideraum zu trennen, was die Abscheidung der Leichtflüssigkeit begünstigt. Sie sind insbesondere vorteilhaft, um Verwirbelungen im Totraum durch die Strömung, insbesondere bei Starkregenereignissen, vermeiden zu können. Vorteilhafterweise kann die Höhe der Gitter- oder Lamellenstege vorzugsweise größer sein als ihre Breite.

In Weiterbildung der Erfindung wird vorgeschlagen, dass der wenigstens eine Leichtflüssigkeitsabscheideraum, vorzugsweise an seiner höchst gelegenen Stelle, mit einer Entlüftungsvorrichtung verbunden ist. Hierdurch kann sichergestellt werden, dass sich bei der Inbetriebnahme der Leichtflüssigkeitsabscheidevorrichtung oder nach jeder Wartung, die mit einer Entleerung der Leichtflüssigkeitsabscheidevorrichtung einhergeht, der Leichtflüssigkeitsabscheideraum wieder vollständig mit Wasser füllt. Dies gewährleistet, dass das von der Leichtflüssigkeitsabscheidevorrichtung bereitgestellte Sammelvolumen effizient genutzt werden kann. Ferner kann durch die Entlüftungsvorrichtung sichergestellt werden, dass der Druck im Leichtflüssigkeitsabscheideraum im Wesentlichen dem äußeren Atmosphärendruck entspricht.

Um bei Bedarf die im Leichtflüssigkeitsabscheideraum abgeschiedene Leichtflüssigkeit entfernen zu können, wird vorgeschlagen, dass der wenigstens eine Leichtflüssigkeitsabscheideraum, vorzugsweise an seiner höchst gelegenen Stelle, mit einem Anschlusskanal zum Entfernen, beispielsweise durch Absaugen, der abgeschiedenen Leichtflüssigkeit aus dem Leichtflüssigkeitsabscheideraum verbunden sein kann. Hierzu können zum Beispiel Abschöpf- oder Absaugvorrichtungen, wie etwa eine Pumpe, verwendet werden, die entweder bei Bedarf in den Anschlusskanal eingeführt werden, oder die permanent dort installiert sind. Ferner empfiehlt es sich, in dem Leichtflüssigkeitsabscheideraum eine Sensorvorrichtung, zum Beispiel einen Schwimmer, vorzusehen, welche den Füllzustand des Leichtflüssigkeitsabscheideraums erfasst und gegebenenfalls, wenn ein kritischer Füllzustand erreicht wird, ein Warnsignal ausgibt, bzw. bei permanent installierter Abschöpf- oder Absaugvorrichtung, diese aktiviert.

Um Bauraum und auch Kosten zu sparen, ist es vorteilhaft, wenn die Entlüftungsvorrichtung und der Anschlusskanal zum Entfernen der abgeschiedenen Leichtflüssigkeit als eine Einheit ausgebildet sind. Zusätzlich oder alternativ kann zur Erleichterung der Wartung wenigstens ein Ende wenigstens eines Strömungsraums in einem im Wesentlichen vertikal verlaufenden Schacht enden.

Grundsätzlich ist es jedoch auch denkbar, die im Abscheideraum gesammelte Leichtflüssigkeit bei einer Wartung zusammen mit dem sich im Strömungsraum befindenden Abwasser von Seiten der Einlassöffnung des Leichtflüssigkeitsabscheiderohrs her abzusaugen. Insbesondere bei Kombination der Leichtflüssigkeitsabscheidevorrichtung mit einer Sedimentationsvorrichtung zum Abscheiden von Teilchen, deren spezifische Dichte größer als die von Wasser ist, können auf diese Weise die Sedimente und die Leichtflüssigkeiten gleichzeitig abgepumpt und der weiteren Entsorgung zugeführt werden. Hierzu ist es vorteilhaft, wenn wenigstens ein Ende wenigstens eines Strömungsraums in einem im Wesentlichen vertikal verlaufenden Schacht endet.

In Weiterbildung der Erfindung wird vorgeschlagen, dass wenigstens ein Teil des Strömungsraums und wenigstens ein Teil des Leichtflüssigkeitsabscheideraums einstückig ausgebildet sind. Beispielsweise kann die Leichtflüssigkeitsabscheidevorrichtung von einem herkömmlichen Rohr gebildet sein, in welches eine den Strömungsraum und den Leichtflüssigkeitsabscheideraum voneinander trennende und die wenigstens eine Durchtrittsöffnung aufweisende Wandung eingebracht ist. In diesem Fall sind die äußeren Begrenzungswandungen von Strömungsraum und Leichiflüssigkeitsabscheideraum einstückig ausgebildet. Ferner können Leichtflüssigkeitsabscheideraum oder/und Strömungsraum aus Kunststoff gefertigt sein. Als Fertigungsverfahren kommt beispielsweise Extrusion in Betracht.

Um den Koaleszenzeffekt möglichst effektiv nutzen zu können, wird in Weiterbildung der Erfindung vorgeschlagen, dass in dem Strömungsraum, vorzugsweise der Auslassöffnung benachbart, wenigstens ein Koaleszenzeinsatz angeordnet ist, der vorzugsweise von im Wesentlichen dem gesamten Abwasser durchströmt wird. Dabei kann der wenigstens eine Koaleszenzeinsatz vorteilhafterweise über einen Wartungsschacht herausnehmbar und auswechselbar sein.

Grundsätzlich besteht die Möglichkeit, das Leichtflüssigkeitsabscheiderohr der erfindungsgemäßen Leichtflüssigkeitsabscheidevorrichtung konstruktiv mit einem Sedimentationsrohr, wie es aus der DE 10 2004 008 960 A1 der Anmelderin bekannt ist, zu kombinieren. Hierdurch wird es möglich, das Abwasser nicht nur zumindest teilweise von Leichtflüssigkeitspartikeln, d.h. von Partikeln deren spezifische Dichte geringer als die von Wasser ist, sondern zeitgleich zumindest teilweise auch von Schwebteilchen, deren spezifische Dichte größer als die von Wasser ist, zu reinigen, sofern solche Schwebteilchen im Abwasser vorhanden sind. Diese Schwebteilchen sinken zumindest teilweise beim Durchströmen des Abwassers durch den wenigstens einen Strömungsraum schwerkraftbedingt nach unten zum Boden des Strömungsraums.

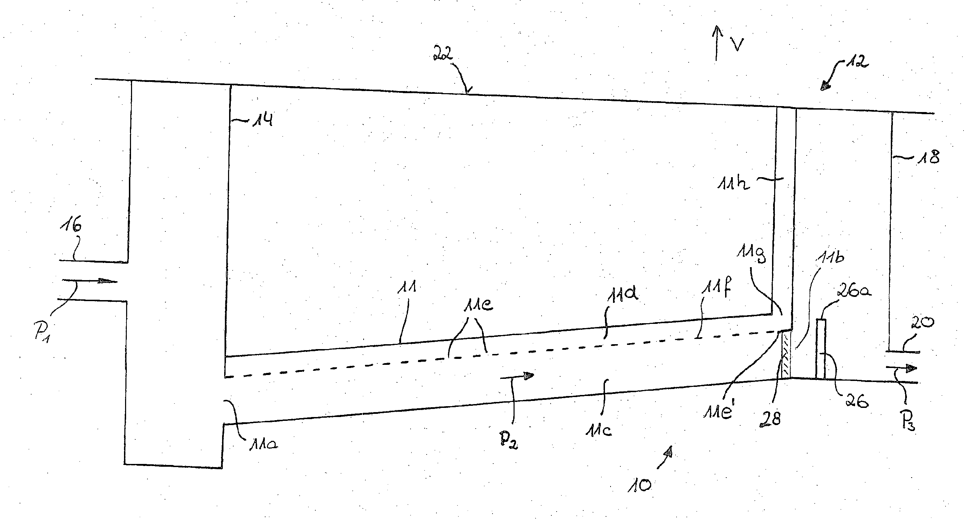

Die Erfindung wird im Folgenden an einem Ausführungsbeispiel anhand der beigefügten Zeichnung näher erläutert werden. Dabei stellt die einzige Figur eine schematische, geschnittene Seitenansicht einer erfindungsgemäßen Leichtflüssigkeitsabscheidevorrichtung als Teil einer Regenwasserbewirtschaftungsanlage dar.

In der einzigen Figur ist eine erfindungsgemäße Leichtflüssigkeitsabscheidevorrichtung ganz allgemein mit 10 bezeichnet. Sie umfasst ein geradliniges, aus Kunststoff gefertigtes Leichtflüssigkeitsabscheiderohr 11 und ist Teil einer Regenwasserbewirtschaftungsanlage 12, welche ferner einen ersten Wartungsschacht 14 mit einem Zulauf 16 und einen zweiten Wartungsschacht 18 mit einem Ablauf 20 umfasst.

Die Leichtflüssigkeitsabscheidevorrichtung 10 umfasst ferner eine Überlaufwand 26, welche in Strömungsrichtung des Abwassers (Pfeil P₂) hinter einer Auslassöffnung 11 b des Leichtflüssigkeitsabscheiderohrs 11 angeordnet ist und eine weiter unten noch näher zu erläuternde Mindesthöhe aufweist.

Durch den Zulauf 16 wird Regenwasser, das auf einer versiegelten Oberfläche 22, beispielsweise einer Straße, einem Parkplatz oder dergleichen, niedergegangen ist, in den im Wesentlichen vertikal verlaufenden ersten Wartungsschacht 14 eingeleitet (Pfeil P₁). Sehr grobe Leichtflüssigkeitspartikel, wie sie beispielsweise bei einer Havarie etwa einer Bremsleitung einer Hydraulikbremse oder anderen Fällen konzentrierten Austritts von ÖI auftreten, scheiden sich bereits im Wartungsschacht 14 vom restlichen Abwasser ab, indem sie an die Oberfläche des Abwassers im Wartungsschacht 14 treiben und somit gar nicht erst in das Leichtflüssigkeitsabscheiderohr 11 hinein gelangen. Wird diese Leichtflüssigkeit allerdings nicht unmittelbar abgepumpt, so besteht die Möglichkeit, dass es bei einem Regenereignis mit dem Abwasser verwirbelt und in das Leichtflüssigkeitsabscheiderohr eingetragen wird.

Wie in der Figur dargestellt ist, ist das Leichtflüssigkeitsabscheiderohr 11 von seiner in der Figur linken, mit dem ersten Wartungsschacht 14 in Verbindung stehendem Ende mit der Einlassöffnung 11a zu seinem in der Figur rechten, mit dem zweiten Wartungsschacht 18 in Verbindung stehenden Ende mit der Auslassöffnung 11b hin ansteigend, das heißt in Strömungsrichtung P₂ des Abwassers mit Gegengefälle, angeordnet. Durch dieses Gegengefälle kann der Inhalt des Leichtflüssigkeitsabscheidraums bei einer Anlagenreinigung über den Wartungsschacht 14 abgesaugt werden.

Damit die aufgestiegene Leichtflüssigkeit die Leichtflüssigkeitsabscheidevorrichtung 10 nicht mit dem restlichen Abwasser durch den Ablauf 20 wieder verlassen, sondern darin zurückgehalten werden kann, ist das Leichtflüssigkeitsabscheiderohr 11 der erfindungsgemäßen Leichtflüssigkeitsabscheidevorrichtung 10 in zwei Räume unterteilt, nämlich in einen Strömungsraum 11c und einen damit einstückig ausgebildeten Leichtflüssigkeitsabscheideraum 11d, die über eine Mehrzahl von Durchtrittsöffnungen 11e miteinander in Verbindung stehen. Die Durchtrittsöffnungen 11e sind im Bereich der Decke 11f des Strömungsraums 11c angeordnet. Der Leichtflüssigkeitsabscheideraum 11d stellt dabei gegenüber dem Strömungsraum 11c strömungstechnisch einen Totraum dar, der an den Stirnseiten verschlossen ist und dadurch in Strömungsrichtung nicht angeströmt werden kann.

Die Leichtflüssigkeitsanteile, wie zum Beispiel ÖI, Benzin oder dergleichen, die im Abwasser schweben, steigen aufgrund ihrer geringeren Dichte gegenüber dem restlichen Abwasser zur Decke 11f des Strömungsraums 11c auf, während das Abwasser das Leichtflüssigkeitsabscheiderohr 11 durchströmt. An der Decke 11f angelangt, treten die Leichtflüssigkeitströpfchen durch die Durchtrittsöffnungen 11e in den Leichtflüssigkeitssammelraum 11d ein. Darüber hinaus können sich auch sehr feine Leichtflüssigkeitspartikel an den Lamellen- bzw. Gitterstegen der Oberfläche der Decke 11f ansammeln. Durch den sogenannten Koaleszenzeffekt neigen die feinen Leichtflüssigkeitspartikel dazu, zusammenzufließen und größere Tropfen zu bilden. Diese können sich dann von der Decke 11f lösen, um ebenfalls durch die Durchtrittsöffnungen 11e hindurchzutreten. Innerhalb des Leichtflüssigkeitsabscheideraums 11d steigen die Leichtflüssigkeitstropfen weiter in vertikaler Richtung V auf und gelangen somit schließlich in einen Leichtflüssigkeitssammelbereich11g des Leichtflüssigkeitsabscheideraums 11d. Dieser Leichtflüssigkeitssammelbereich 11g befindet sich am höchst gelegenen Abschnitt des Leichtflüssigkeitsabscheideraums 11d, das heißt in der Figur ganz rechts.

Mit dem Leichtflüssigkeitssammelbereich 11g verbunden ist ein Anschlusskanal 11h, der hauptsächlich zur Entlüftung des Leichtflüssigkeitsabscheideraums 11 d dient. Obgleich die Entfernung der Leichtflüssigkeit aus dem Leichtflüssigkeitssammelbereich 11g üblicherweise über den Wartungsschacht 14 zusammen mit dem restlichen, sich im Strömungsraum 11c und im Wartungsschacht 14 befindenden Abwasser erfolgt, ermöglicht der Anschlusskanal 11h grundsätzlich auch eine gesonderte Entsorgung nur der Leichtflüssigkeit aus dem Leichtflüssigkeitssammelbereich 11g.

Das obere Ende 26a der Überlaufwand 26 liegt notwendigerweise höher als ein am höchsten gelegener Durchtrittsabschnitt 11e' der Durchtrittsöffnungen 11e, vorzugsweise auf Höhe der Rohrsohle des Zulaufs 16. Das Abwasser muss über das obere Ende 26a der Überlaufwand 26 hinüberströmen, bevor das von der Leichtflüssigkeit weitgehend gereinigte Abwasser vom zweiten Wartungsschacht 18 über dessen Auslass 20 beispielsweise einer Rigolenanordnung zugeführt werden kann (Pfeil P₃), welche der Versickerung des Abwassers im Erdreich dient. Mittels der Überlaufwand 26 wird somit sichergestellt, dass, zumindest wenn Abwasser durch den Ablauf 20 strömt, der Abwasserpegel im Leichtflüssigkeitsabscheiderohr 11 stets so hoch ist, dass die abgeschiedene Leichtflüssigkeit im Leichtflüssigkeitssammelbereich 11g zurückgehalten werden kann und nicht mit dem restlichen Abwasser die Leichtflüssigkeitsabscheidevorrichtung 10 verlässt.

Nachzutragen ist noch, dass in dem Strömungsraum 11c der Auslassöffnung 11b benachbart, ein Koaleszenzeinsatz 28 angeordnet sein kann, der von im Wesentlichen dem gesamten Abwasser durchströmt wird. Mit Hilfe dieses Koaleszenzeinsatzes 28 kann die Reinigungswirkung des Koaleszenzeffekts effektiv genutzt werden. Ferner kann der Koaleszenzeinsatz 28 über den Wartungsschacht 18 herausnehmbar und auswechselbar sein. Obgleich dies nicht dargestellt ist, kann selbstverständlich auch eine Mehrzahl derartiger Koaleszenzeinsätze 28 vorgesehen sein, die über die Länge des Strömungsraums 11c verteilt angeordnet sind.

## Patentansprüche

1. Regenwasserbewirtschaftungsanlage mit einer Leichtflüssigkeitsabscheidevorrichtung (10) zum zumindest teilweisen Entfernen von Leichtflüssigkeit, beispielsweise ÖI, Benzin oder dergleichen, aus Abwasser,
wobei die Leichtflüssigkeitsabscheidevorrichtung (10) wenigstens ein im Wesentlichen horizontal angeordnetes Leichtflüssigkeitsabscheiderohr (11) umfasst, welches wenigstens einen Strömungsraum (11c) mit wenigstens einer Einlassöffnung (11a) und wenigstens einer Auslassöffnung (11 b) aufweist,
wobei die wenigstens eine Einlassöffnung (11 a) dazu bestimmt ist, das Abwasser in den wenigstens einen Strömungsraum (11 c) eintreten zu lassen, und die wenigstens eine Auslassöffnung (11 b) dazu bestimmt ist, das Abwasser nach Durchströmen des wenigstens einen Strömungsraums (11c) aus diesem wieder austreten zu lassen,
wobei der wenigstens eine Strömungsraum (11c) über eine Mehrzahl von an seiner Decke (11f) vorgesehene und in Strömungsrichtung (P₂) aufeinander folgend angeordnete Durchtrittsöffnungen (11e) mit wenigstens einem Leichtflüssigkeitsabscheideraum (11d) verbunden ist, der dazu bestimmt ist, in dem wenigstens einen Strömungsraum (11c) bedingt durch die gegenüber dem restlichen Abwasser geringere spezifische Dichte nach oben aufsteigende und durch die Durchtrittsöffnungen (11e) hindurchtretende Leichtflüssigkeit darin abscheiden zu lassen,
wobei die Leichtflüssigkeitsabscheidevorrichtung (10) von einem herkömmlichen Rohr gebildet ist, in welches eine den Strömungsraum (11 c) und den Leichtflüssigkeitsabscheideraum (11d) voneinander trennende und die Mehrzahl von Durchtrittsöffnungen (11e) aufweisende Wandung eingebracht ist, so dass die äußeren Begrenzungswandungen von Strömungsraum (11c) und Leichtflüssigkeitsabscheideraum (11d) einstückig ausgebildet sind, und
wobei ein den Durchtrittsöffnungen (11 e) benachbarter Abschnitt des wenigstens einen Strömungsraums (11 c) mit wenigstens einem Quersteg versehen ist, welcher bezüglich der Strömungsrichtung (P₂) im Wesentlichen orthogonal oder schräg angeordnet ist, **dadurch gekennzeichnet, dass** die Leichtflüssigkeitsabscheidevorrichtung (10) ferner eine Überlaufwand (26) umfasst, welche in Strömungsrichtung des Abwassers hinter der wenigstens einen Auslassöffnung (11 b) des wenigstens einen Leichtflüssigkeitsabscheiderohrs (11) angeordnet ist und eine Höhe aufweist, die groß genug ist, um sicherzustellen, dass dann, wenn Abwasser die Leichtflüssigkeitsabscheidevorrichtung (10) verlässt, der Abwasserpegel stets hoch genug ist, um die Leichtflüssigkeit in dem wenigstens einen Leichtflüssigkeitsabscheideraum (11d) zurückhalten zu können.

2. Regenwasserbewirtschaftungsanlage nach Anspruch 1,
**dadurch gekennzeichnet, dass** das wenigstens eine Leichtflüssigkeitsabscheiderohr (11d) im Wesentlichen gradlinig ausgebildet ist oder/und einen im Wesentlichen kreisförmigen Querschnitt aufweist.

3. Regenwasserbewirtschaftungsanlage nach Anspruch 1 oder 2,
**dadurch gekennzeichnet, dass** wenigstens ein Strömungsraum (11c) und wenigstens ein Leichtflüssigkeitsabscheideraum (11d) durch eine einzige Durchtrittsöffnung (11e) miteinander verbunden sind, welche sich vorzugsweise über wenigstens 1%, bevorzugter über wenigstens 25%, noch bevorzugter über wenigstens 50%, der Länge des Strömungsraums (11 c) erstreckt.

4. Regenwasserbewirtschaftungsanlage nach einem der Ansprüche 1-3,
**dadurch gekennzeichnet, dass** der wenigstens eine Leichtflüssigkeitsabscheideraum (11 d), vorzugsweise an seiner höchst gelegenen Stelle, mit einer Entlüftungsvorrichtung (11 h) verbunden ist.

5. Regenwasserbewirtschaftungsanlage nach einem der Ansprüche 1-4,
**dadurch gekennzeichnet, dass** der wenigstens eine Leichtflüssigkeitsabscheideraum (11d), vorzugsweise an seiner höchst gelegenen Stelle, mit einem Anschlusskanal (11 h) zum Entfernen, beispielsweise durch Absaugen, der abgeschiedenen Leichtflüssigkeit aus dem Leichtflüssigkeitsabscheideraum (11d) verbunden ist.

6. Regenwasserbewirtschaftungsanlage nach einem der Ansprüche 1-5,
**dadurch gekennzeichnet, dass** wenigstens ein Ende wenigstens eines Strömungsraums (11 c) in einem im Wesentlichen vertikal verlaufenden. Schacht (14, 18) endet.

7. Regenwasserbewirtschaftungsanlage nach einem der Ansprüche 1-6,
**dadurch gekennzeichnet, dass** wenigstens ein Strömungsraum (11c) oder/und wenigstens ein Leichtflüssigkeitsabscheideraum (11d) aus Kunststoff gefertigt ist/sind.

8. Regenwasserbewirtschaftungsanlage nach einem der Ansprüche 1-7,
**dadurch gekennzeichnet, dass** in dem Strömungsraum (11c), vorzugsweise der Auslassöffnung (11 b) benachbart, wenigstens ein Koaleszenzeinsatz (28) angeordnet ist, der vorzugsweise von im Wesentlichen dem gesamten Abwasser durchströmt wird.

9. Regenwasserbewirtschaftungsanlage nach Anspruch 8,
**dadurch gekennzeichnet, dass** der wenigstens eine Koaleszenzeinsatz (28) über einen Wartungsschacht (18) herausnehmbar und auswechselbar ist.

## Claims

1. Rainwater management system comprising a light liquid separation device (10) for removing at least some light liquid, for example oil, petrol or the like, from wastewater, the light liquid separation device (10) comprising at least one substantially horizontal light liquid separation pipe (11) which has at least one flow space (11c) having at least one inlet opening (11a) and at least one outlet opening (11b), the at least one inlet opening (11a) being designed to allow the wastewater to enter the at least one flow space (11 c), and the at least one outlet opening (11 b) being designed to allow the wastewater to exit the at least one flow space (11c) after flowing therethrough, the at least one flow space (11c) being connected to at least one light liquid separation space (11d) via a plurality of through-openings (11e) provided on the roof (11f) thereof and arranged in succession in the flow direction (P₂), which light liquid separation space is designed to allow the light liquid to separate in the at least one flow space (11 c), which light liquid rises upwards and passes through the through-openings (11e) as a result of the relatively low specific density compared with the remaining wastewater, the light liquid separation device (10) being formed from a conventional pipe in which is inserted a wall which separates the flow space (11c) and the light liquid separation space (11d) and has the plurality of through-openings (11e), so that the outer limiting walls of the flow space (11c) and the light liquid separation space (11d) are formed integrally, and a portion of the at least one flow space (11c) that is adjacent to the through-openings (11e) being provided with at least one transverse bar which is arranged substantially orthogonally or obliquely with respect to the flow direction (P₂), **characterised in that** the light liquid separation device (10) further comprises an overflow wall (26) which is arranged upstream of the at least one outlet opening (11 b) of the at least one light liquid separation pipe (11) in the flow direction of the wastewater and is sufficiently high as to ensure that the wastewater level is always sufficiently high to retain the light liquid in the at least one light liquid separation space (11d) when wastewater leaves the light liquid separation device (10).

2. Rainwater management system according to claim 1, **characterised in that** the at least one light liquid separation pipe (11d) is substantially straight and/or has a substantially circular cross section.

3. Rainwater management system according to either claim 1 or claim 2, **characterised in that** at least one flow space (11c) and at least one light liquid separation space (11d) are interconnected by a single through-opening (11e) which preferably extends over at least 1 %, more preferably over at least 25 %, even more preferably over at least 50 % of the length of the flow space (11c).

4. Rainwater management system according to any of claims 1 to 3, **characterised in that** the at least one light liquid separation space (11d) is connected, preferably at its highest point, to a ventilation device (11 h).

5. Rainwater management system according to any of claims 1 to 4, **characterised in that** the at least one light liquid separation space (11d) is connected, preferably at its highest point, to a connection duct (11 h) for removing the separated light liquid from the light liquid separation space (11d), for example by suction.

6. Rainwater management system according to any of claims 1 to 5, **characterised in that** at least one end of at least one flow space (11c) terminates in a substantially vertical shaft (14, 18).

7. Rainwater management system according to any of claims 1 to 6, **characterised in that** at least one flow space (11c) and/or at least one light liquid separation space (11d) is/are produced from plastics material.

8. Rainwater management system according to any of claims 1 to 7, **characterised in that** at least one coalescence insert (28) is arranged in the flow space (11c), preferably adjacent to the outlet opening (11 b), all the wastewater preferably flowing through said insert.

9. Rainwater management system according to claim 8, **characterised in that** the at least one coalescence insert (28) can be removed and replaced via a maintenance shaft (18).

## Revendications

1. Installation de valorisation d'eau de pluie avec un dispositif de séparation de liquides légers (10) pour l'élimination au moins partielle de liquide léger, par exemple d'huile, d'essence ou analogues, hors d'eaux usées,
dans laquelle le dispositif de séparation de liquides légers (10) comprend au moins un tube de séparation de liquides légers (11) disposé essentiellement horizontalement, qui présente au moins une chambre d'écoulement (11c) avec au moins une ouverture d'entrée (11a) et au moins une ouverture de sortie (11b),
dans laquelle ladite au moins une ouverture d'entrée (11a) est destinée à laisser entrer les eaux usées dans ladite au moins une chambre d'écoulement (11c), et ladite au moins une ouverture de sortie (11b) est destinée à laisser de nouveau sortir les eaux usées hors de ladite au moins une chambre d'écoulement (11c) après la traversée de celle-ci,
dans laquelle ladite au moins une chambre d'écoulement (11c) est raccordée, par une multiplicité d'ouvertures de passage (11e) prévues à son plafond (11f et disposées à la suite l'une de l'autre dans la direction d'écoulement (P₂), à au moins une chambre de séparation de liquides légers (11d), qui est destinée à opérer dans ladite au moins une chambre d'écoulement (11c) la séparation du liquide léger se déplaçant vers le haut en raison de sa densité moindre que celle du reste des eaux usées et s'écoulant à travers les ouvertures de passage (11e) dans celle-ci,
dans laquelle le dispositif de séparation de liquides légers (10) est formé par un tube conventionnel, dans lequel est installée une paroi séparant l'une de l'autre la chambre d'écoulement (11c) et la chambre de séparation de liquides légers (11d) et présentant une multiplicité d'ouvertures de passage (11e), de telle manière que les parois de limitation extérieures de la chambre d'écoulement (11c) et de la chambre de séparation de liquides légers (11d) soient réalisées en une seule pièce, et
dans laquelle une partie de ladite au moins une chambre d'écoulement (11c) proche des ouvertures de passage (11e) est munie d'au moins une nervure transversale, qui est disposée essentiellement perpendiculairement ou en oblique par rapport à la direction d'écoulement (P₂),
**caractérisée en ce que** le dispositif de séparation de liquides légers (10) comprend en outre une paroi de trop-plein (26), qui est disposée, dans la direction d'écoulement des eaux usées, derrière ladite au moins une ouverture de sortie (11b) dudit au moins un tube de séparation de liquides légers (11) et qui présente une hauteur, qui est suffisamment grande pour assurer que, lorsque des eaux usées quittent le dispositif de séparation de liquides légers (10), le niveau des eaux usées soit toujours suffisamment haut pour pouvoir retenir le liquide léger dans ladite au moins une chambre de séparation de liquides légers (11d).

2. Installation de valorisation d'eau de pluie selon la revendication 1, **caractérisée en ce que** ledit au moins un tube de séparation de liquides légers (11d) est réalisé sous forme essentiellement rectiligne et/ou présente une section transversale essentiellement circulaire.

3. Installation de valorisation d'eau de pluie selon la revendication 1 ou 2, **caractérisée en ce qu'**au moins une chambre d'écoulement (11c) et au moins une chambre de séparation de liquides légers (11d) sont raccordées l'une à l'autre par une seule ouverture de passage (11e), qui s'étend de préférence sur au moins 1 %, de préférence sur au moins 25 %, et de préférence encore sur au moins 50 %, de la longueur de la chambre d'écoulement (11c)

4. Installation de valorisation d'eau de pluie selon l'une quelconque des revendications 1 à 3, **caractérisée en ce que** ladite au moins une chambre de séparation de liquides légers (11d) est raccordée à un dispositif d'aération (11h), de préférence à son point situé le plus haut.

5. Installation de valorisation d'eau de pluie selon l'une quelconque des revendications 1 à 4, **caractérisée en ce que** ladite au moins une chambre de séparation de liquides légers (11d) est raccordée à un canal de raccordement (11h), de préférence à son point situé le plus haut, pour l'élimination, par exemple par aspiration, du liquide léger séparé hors de la chambre de séparation de liquides légers (11d).

6. Installation de valorisation d'eau de pluie selon l'une quelconque des revendications 1 à 5, **caractérisée en ce qu'**au moins une extrémité d'au moins une chambre d'écoulement (11c) se termine dans un puits (14, 18) qui s'étend essentiellement verticalement.

7. Installation de valorisation d'eau de pluie selon l'une quelconque des revendications 1 à 6, **caractérisée en ce qu'**au moins une chambre d'écoulement (11c) et/ou au moins une chambre de séparation de liquides légers (11d) est/sont fabriquée(s) en matière plastique.

8. Installation de valorisation d'eau de pluie selon l'une quelconque des revendications 1 à 7, **caractérisée en ce qu'**au moins un insert de coalescence (28) est disposé dans la chambre d'écoulement (11c), de préférence à proximité de l'ouverture de sortie (11b), lequel est de préférence traversé par essentiellement la totalité des eaux usées.

9. Installation de valorisation d'eau de pluie selon la revendication 8, **caractérisée en ce que** ledit au moins un insert de coalescence (28) peut être retiré et remplacé via un puits d'entretien (18).
